# EUROPEAN PATENT SPECIFICATION

(11) **EP 3 093 734 B1**
(45) Date of publication and mention of the grant of the patent: **01.01.2020**
(21) Application number: 16166421.4
(22) Date of filing: 21.04.2016
(51) Int. Cl.: G06F 3/044, G06F 3/01, B60K 35/00, B60K 37/06

(54) **SYSTEMS AND METHODS FOR DISTRIBUTING HAPTIC EFFECTS TO USERS INTERACTING WITH USER INTERFACES**
SYSTEME UND VERFAHREN ZUR VERTEILUNG VON HAPTISCHEN EFFEKTEN AN BENUTZER, DIE EINE INTERAKTION MIT BENUTZEROBERFLÄCHEN AUSFÜHREN
SYSTÈMES ET PROCÉDÉS POUR TRANSMETTRE DES EFFETS HAPTIQUES À DES UTILISATEURS INTERAGISSANT AVEC DES INTERFACES UTILISATEUR

(30) Priority: 15.05.2015 US 201514713166
(43) Date of publication of application: 16.11.2016
(73) Proprietor: Immersion Corporation, San Jose, CA 95134 (US)
(72) Inventor: RIHN, William S., San Jose, CA 95126 (US)
(74) Representative: Hofstetter, Schurack & Partner

(56) References cited:
- WO-A1-2009/118272
- WO-A1-2014/092512
- GB-A- 2 445 445
- US-A1- 2009 244 017
- US-A1- 2015 022 328

## Description

### FIELD

The present invention is generally related to systems and methods for distributing haptic effects to users interacting with user interfaces.

### BACKGROUND

Many user interfaces, such as automotive user interfaces located in center consoles of automobiles, are designed such that multiple interactions are needed to activate a specific function, such as pressing an air conditioning button before adjusting the temperature. One challenge with such interactions is that the user may not have a way to identify where buttons exist on a touch screen of the user interface without looking at the touch screen. Although haptic effects may be generated at the user interface to assist the user with identifying where the buttons are located without having to look at the touch screen, the user would need to stay in contact with the touch screen for a period of time so that the haptic effects can be generated and disseminated by the user.

WO 2009/118272 A1 describes a control device for controlling one or more electrical apparatuses, in particular in a motor vehicle, having a manually actuable actuating unit and having a feedback device for generating a haptic response signal in the event of an actuation of the actuating unit. The actuating unit is a touch-sensitive touch screen, wherein the feedback device is arranged at a location separate from the touch screen.

### SUMMARY

It is desirable to provide haptic effects to locations where the user will normally be in constant contact so that the user does not have to be distracted by having to keep in contact with the user interface in order to receive information from the user interface. According to an aspect of the invention, a system is provided and includes a user interface configured to receive an input from a user of the system, a sensor configured to sense a position of a user input element relative to the user interface, and a processor configured to receive an input signal from the sensor based on the position of the user input element relative to the user interface, determine a haptic effect based on the input signal, and output a haptic effect generation signal based on the determined haptic effect. The system also includes a haptic output device configured to receive the haptic effect generation signal from the processor and generate the determined haptic effect to the user, the haptic output device being located separate from the user interface so that the determined haptic effect is generated away from the user interface.

In an embodiment, the system also includes a wearable device configured to be worn by the user, and the wearable device includes the haptic output device.

In an embodiment, the wearable device is a smartwatch. In an embodiment, the wearable device is a fitness band.

In an embodiment, the system also includes a handheld electronic device configured to be carried by the user, and the handheld electronic device includes the haptic output device.

In an embodiment, the handheld electronic device is a smartphone.

In an embodiment, the user interface includes a second haptic output device, and the second haptic output device is configured to generate a second haptic effect to the user at the user interface as a confirmation of the input from the user.

In an embodiment, the haptic output device is configured to generate a third haptic effect to the user at a location away from the user interface. In an embodiment, the second haptic effect and the third haptic effect are the same haptic effect.

In an embodiment, the system also includes a handheld electronic device configured to be carried by the user, and the handheld electronic device includes the user interface.

According to an aspect of the invention, a method is provided for generating a haptic effect to a user of a system. The method includes sensing, with a sensor, a user input element located near a user interface configured to receive an input from the user, determining, with a processor, a haptic effect to generate to the user based on the sensing, outputting, with the processor, a haptic effect generation signal based on the determined haptic effect to a haptic output device, and generating the determined haptic effect, with the haptic output device, at a location away from the user interface.

In an embodiment, the method also includes sensing, with a second sensor, an input by the user via the user input element contacting the user interface, determining, with the processor, a second haptic effect to generate to the user based on the input sensed, and generating the second haptic effect, with a second haptic output device, to the user at the user interface as a confirmation of the input from the user.

In an embodiment, the second haptic effect is generated as long as the user input element contacts the user interface.

In an embodiment, the method also includes determining, with the processor, a third haptic effect to generate to the user based on the input sensed, and generating the third haptic effect, with the haptic output device, to the user at the location away from the user interface. In an embodiment, the second haptic effect and the third haptic effect are the same haptic effect.

### BRIEF DESCRIPTION OF THE DRAWINGS

The components of the following Figures are illustrated to emphasize the general principles of the present disclosure and are not necessarily drawn to scale. Reference characters designating corresponding components are repeated as necessary throughout the Figures for the sake of consistency and clarity.
Figure 1 is a schematic illustration of a system in accordance with embodiments of the invention;
Figure 2 is a schematic illustration of a processor of the system of Figure 1;
Figure 3 is a schematic illustration of a portion of an implementation of the system of Figure 1;
Figure 4 is a schematic illustration of an implementation of the system of Figure 1;
Figures 5A and 5B are a schematic illustrations of a portion of an implementation of the system of Figure 1;
Figure 6 is a schematic illustration of a portion of an implementation of the system of Figure 1;
Figure 7 is a schematic illustration of a portion of an implementation of the system of Figure 1;
Figure 8 is schematic illustrations of an implementation of the system of Figure 1; and
Figure 9 is a flow chart that schematically illustrates a method according to embodiments of the invention.

### DETAILED DESCRIPTION

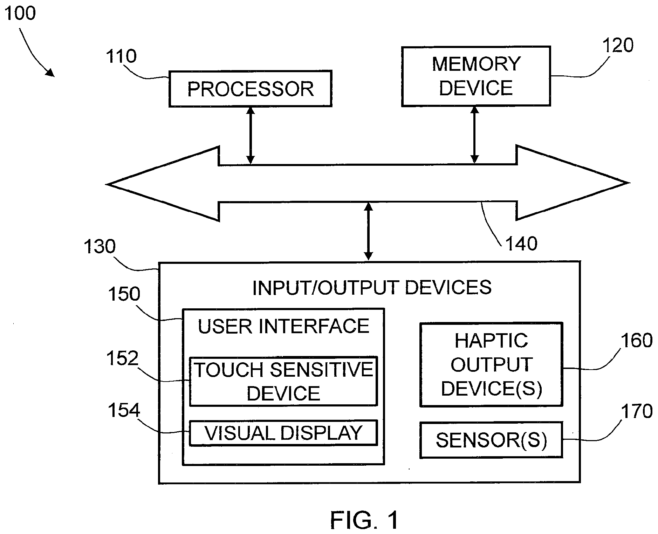

Figure 1 is a schematic illustration of a system 100 in accordance with embodiments of the invention. The system 100 may be part of or include one or more of an electronic device (such as a desktop computer, laptop computer, electronic workbook, point-of-sale device, game controller, etc.), an electronic handheld device (such as a mobile phone, smartphone, tablet, tablet gaming device, personal digital assistant ("PDA"), portable e-mail device, portable Internet access device, calculator, etc.), a wearable device (such as a smartwatch, fitness band, glasses, head-mounted display, clothing, such as smart socks, smart shoes, etc.) or other electronic device. In some embodiments, the system 100 or a part of the system 100 may be integrated into a larger apparatus, such as a vehicle, as described in implementations of the system 100 below.

As illustrated, the system 100 includes a processor 110, a memory device 120, and input/output devices 130, which may be interconnected via a bus and/or communications network 140. In an embodiment, the input/output devices 130 may include a user interface 150, at least one haptic output device 160, at least one sensor 170, and/or other input/output devices.

The processor 110 may be a general-purpose or specific-purpose processor or microcontroller for managing or controlling the operations and functions of the system 100. For example, the processor 110 may be specifically designed as an application-specific integrated circuit ("ASIC") to control output signals to a user of the input/output devices 130 to provide haptic feedback or effects. The processor 110 may be configured to decide, based on predefined factors, what haptic feedback or effects are to be generated based on a haptic signal received or determined by the processor 110, the order in which the haptic effects are generated, and the magnitude, frequency, duration, and/or other parameters of the haptic effects. The processor 110 may also be configured to provide streaming commands that can be used to drive the haptic output device 160 for providing a particular haptic effect. In some embodiments, more than one processor 110 may be included in the system 100, with each processor 110 configured to perform certain functions within the system 100. An embodiment of the processor 110 is described in further detail below.

The memory device 120 may include one or more internally fixed storage units, removable storage units, and/or remotely accessible storage units. The various storage units may include any combination of volatile memory and nonvolatile memory. The storage units may be configured to store any combination of information, data, instructions, software code, etc. More particularly, the storage units may include haptic effect profiles, instructions for how the haptic output device 160 of the input/output devices 130 are to be driven, and/or other information for generating haptic feedback or effects.

The bus and/or communications network 140 may be configured to allow signal communication between the various components of the system 100 and also to access information from remote computers or servers through another communications network. The communications network may include one or more of a wireless communications network, an Internet, a personal area network ("PAN"), a local area network ("LAN"), a metropolitan area network ("MAN"), a wide area network ("WAN"), etc. The communications network may include local radio frequencies, cellular (GPRS, CDMA, GSM, CDPD, 2.5G, 3G, 4G LTE, etc.), Ultra-WideBand ("UWB"), WiMax, ZigBee, and/or other ad-hoc/mesh wireless network technologies, etc.

The user interface 150 may include a touch sensitive device 152 that may be configured as any suitable user interface or touch/contact surface assembly and a visual display 154 configured to display images. The visual display 154 may include a high definition display screen. The touch sensitive device 152 may be any touch screen, touch pad, touch sensitive structure, computer monitor, laptop display device, workbook display device, portable electronic device screen, or other suitable touch sensitive device. The touch sensitive device 152 may be configured for physical interaction with a user input element, such as a stylus or a part of the user's hand, such as a palm or digit (e.g., finger or thumb), etc. In some embodiments, the touch sensitive device 152 may include the visual display 154 and include at least one sensor superimposed thereon to receive inputs from the users input element.

The haptic output device 160 is configured to provide haptic feedback to the user of the system 100. The haptic feedback provided by the haptic output device 160 may be created with any of the methods of creating haptic effects, such as vibration, deformation, kinesthetic sensations, electrostatic or ultrasonic friction, etc. In an embodiment, the haptic output device 160 may include an actuator, for example, an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric materials, electro-active polymers or shape memory alloys, a macro-composite fiber actuator, an electro-static actuator, an electro-tactile actuator, and/or another type of actuator that provides a physical feedback such as vibrotactile feedback. The haptic output device 160 may include non-mechanical or non-vibratory devices such as those that use electrostatic friction ("ESF"), ultrasonic friction ("USF"), or those that induce acoustic radiation pressure with an ultrasonic haptic transducer, or those that use a haptic substrate and a flexible or deformable surface, or those that provide thermal effects, or those that provide projected haptic output such as a puff of air using an air jet, and so on. Multiple haptic output devices 160 may be used to generate different haptic effects, which may be used to create a wide range of effects such as deformations, vibrations, etc.

In an embodiment, multiple haptic output devices 160 may be positioned at different locations within the system 100 so that different information may be communicated to the user based on the particular location of the haptic output device 160. For example, as described in further detail below, in implementations in a vehicle, at least one of the haptic output devices 160 may be positioned away from the user interface 150 in the center console, such as at or in a steering wheel, a driver's seat and/or a driver's seatbelt, or any other surface the driver routinely comes into contact with while operating the vehicle, such that surfaces in constant contact with or touched by the driver may be moved or vibrated to provide the haptic feedback to the driver. In an embodiment, the haptic output device 160 may be located in a wearable device that is worn by the driver or any user of the system 100. The wearable device may be in the form of, for example, a smartwatch, wrist band, such as a fitness band, a bracelet, a ring, an anklet, smart clothing including smart socks or smart shoes, eyeglasses, a head-mounted display, etc. For non-vehicle implementations of the system 100, the user interface 150 may be part of a tablet or smartphone, for example.

Returning to Figure 1, the sensor 170 may include one or more of the following types of sensors. In an embodiment, the sensor 170 may include a proximity sensor configured to sense the location of the user input element, such as the user's hand or a part of the user's hand, such as a finger, or a stylus, to an input device, such as the user interface 150. In an embodiment, the sensor 170 may include a camera and image processor and be configured to sense the location of the user input element relative to the user interface 150. In an embodiment, the sensor 170 may be located at or be part of the user interface 150. In an embodiment, the sensor 170 may be located in a wearable device being worn by the user, such as a smartwatch or wrist band. In an embodiment, the sensor 170 may be configured to sense the location of the electronic device(s) that include the haptic output device(s) 160 within the system 100. In an embodiment, the sensor 170 may be part of the user interface 150 and include a pressure sensor configured to measure the pressure applied to a touch location at the user interface 150, for example a touch location at the touch sensitive device 152 of the user interface 150. In an embodiment, the sensor 170 may include a temperature, humidity, and/or atmospheric pressure sensor configured to measure environmental conditions. In an embodiment, the sensor 170 may include a biometric sensor configured to capture a user's biometric measures, such as heart rate, etc. In an embodiment, the sensor 170 may include image sensors and/or a camera configured to capture a user's facial expressions and associated biometric information. In an embodiment, the sensor 170 may be used to identify the person who should receive the haptic feedback.

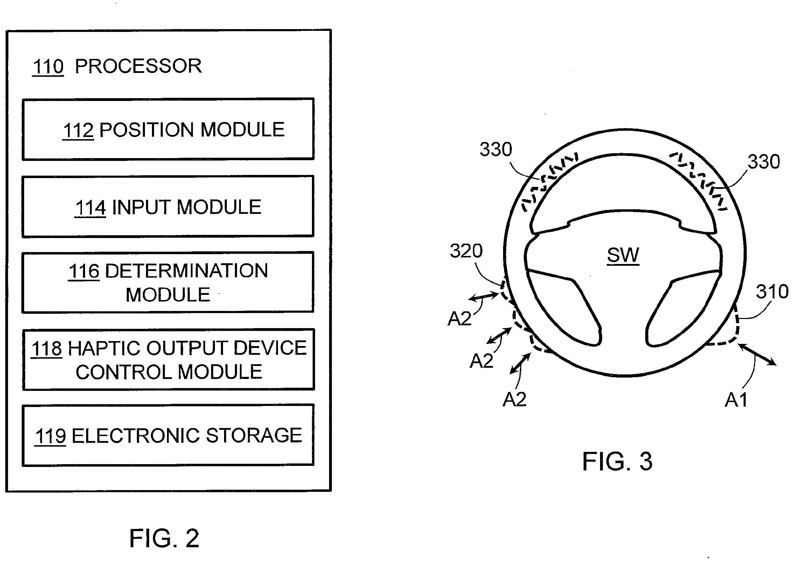

Figure 2 illustrates an embodiment of the processor 110 in more detail. The processor 110 may be configured to execute one or more computer program modules. The one or more computer program modules may include one or more of a position module 112, an input module 114, a determination module 116, a haptic output device control module 118, and/or other modules. The processor 110 may also include electronic storage 119, which may be the same as the memory device 120 or in addition to the memory device 120. The processor 110 may be configured to execute the modules 112, 114, 116 and/or 118 by software, hardware, firmware, some combination of software, hardware, and/or firmware, and/or other mechanisms for configuring processing capabilities on processor 110.

It should be appreciated that although modules 112, 114, 116 and 118 are illustrated in Figure 2 as being co-located within a single processing unit, in embodiments in which the system includes multiple processors, one or more of modules 112, 114, 116 and/or 118 may be located remotely from the other modules. The description of the functionality provided by the different modules 112, 114, 116 and/or 118 described below is for illustrative purposes, and is not intended to be limiting, as any of the modules 112, 114, 116 and/or 118 may provide more or less functionality than is described. For example, one or more of the modules 112, 114, 116 and/or 118 may be eliminated, and some or all of its functionality may be provided by other ones of the modules 112, 114, 116 and/or 118. As another example, the processor 110 may be configured to execute one or more additional modules that may perform some or all of the functionality attributed below to one of the modules 112, 114, 116 and/or 118.

The position module 112 is configured or programmed to receive an input signal from the sensor 170 that is generated when the sensor 170 detects the user input element, such as the user's hand or a part of the user's hand, is in the vicinity of the user interface 150. The position module 112 is also configured or programmed to send a position signal to the determination module 116 for further processing.

The input module 114 is configured or programmed to receive an input signal from the user interface 150 that is generated when the user interface 150 detects an input from the user via the user input element. For example, the user may indicate an input by contacting a part of the user interface 150 that represents, for example, a button to trigger a function of the system 100 or apparatus in which the system 100 is a part of. For example, in implementations of the system 100 in a vehicle, the driver may press a button or a portion of the visual display 154 that displays a button, to indicate that the driver wants to turn on the air conditioning in the vehicle and set the target temperature for the vehicle. The input module 114 is configured or programmed to receive an input signal from the user interface 150, determine what further function the system 100 is to perform based on the input signal, and send a function signal to the determination module 116 for further processing.

The determination module 116 is configured or programmed to determine what type of action is to be taken by the system 100 according to the position signal from the position module 112 based on an output from the sensor 170 and the function signal from the input module 114 based on an output from the user interface 150, and what type of haptic feedback is to be generated by the haptic output device 160. The determination module 116 may be programmed with a library of position and function information available to the system 100 and corresponding haptic effect, if any, so that the determination module 116 may determine a corresponding output. In addition to sending a signal to command a particular action to be taken, such as turning on the air conditioner, the determination module 116 may also output a signal to the haptic output device control module 118 so that a suitable haptic effect may be provided to the user.

The haptic output device control module 118 is configured or programmed to determine a haptic control signal to output to the haptic output device 160, based on the signal generated by the determination module 116. Determining the haptic control signal may include determining one or more parameters that include an amplitude, frequency, duration, etc., of the haptic feedback that will be generated by the haptic output device 160 to provide the desired effect to the user, based on all inputs to the system 100.

In implementations of embodiments of the invention in which the system 100 is provided in a vehicle, the vehicle may be equipped with a steering wheel SW illustrated in Figure 3. As illustrated, the steering wheel SW may include a first haptic output device 310 that is configured to generate a single deformation point, as illustrated by arrow A1, and/or a second haptic output device(s) 320 configured to generate multiple deformation points with spatiotemporal patterns, as illustrated by arrows A2, and/or a third haptic output device 330 configured to generate changes in stiffness/softness/material properties of the contact point between driver's hand and the steering wheel SW. In an embodiment, different types of haptic effects may be provided to the driver of the vehicle to convey different information to the driver and any of the haptic output devices 310, 320, 330 may be configured to generate vibrations to the driver.

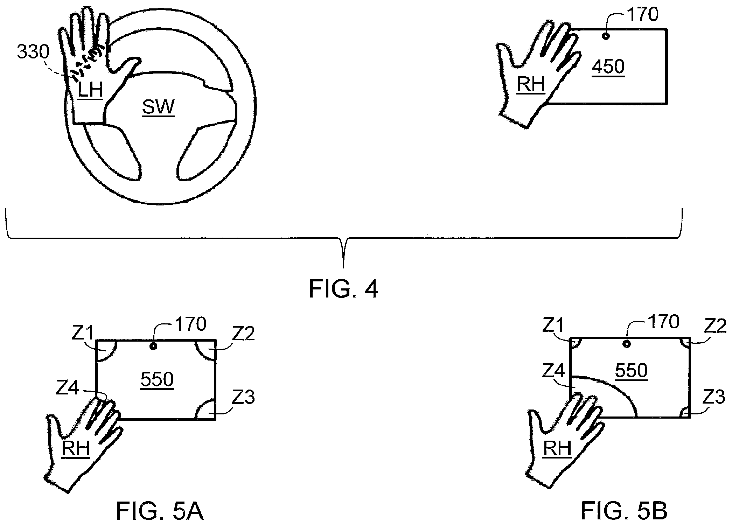

In an implementation of embodiments of the invention, a driver driving a vehicle in stormy conditions may not want to look away from the road, but may also want to change the temperature inside the vehicle. Figure 4 illustrates the driver's right hand RH positioned near a user interface 450 located in the center console. When the sensor 170 described above senses that the driver's right hand RH is near or in proximity to the user interface 450, a haptic effect may be provided to the driver's left hand LH via the haptic output device 330 in the steering wheel SW. This allows the driver to keep his/her eyes on the road ahead, instead of the user interface 450. Different haptic effects may be generated by at least one haptic output device located in the steering wheel SW, depending on what part of the user interface 450 the driver's right hand RH is near or proximate to. The haptic effects generated by the haptic output device 330 in the steering wheel SW may be varied to help the driver locate the part of the user interface 450 that the driver needs to contact in order to provide an input to the system so that an adjustment to a subsystem of the vehicle, such as the air conditioner, may be made. By providing different haptic effects, the driver may more quickly determine when to press the user interface 450, and when the driver contacts the user interface 450 with the user input element, such as a finger, haptic effects may be played at the user interface 150 and the steering wheel SW, either at the same time or sequentially.

Figures 5A and 5B illustrate an embodiment of a user interface 550 having four zones indicated by Z1, Z2, Z3 and Z4, with each zone configured to control certain parameters of the subsystems of the vehicle. For example, Z1 may represent a first zone that is used to control the volume of the stereo system, Z2 may represent a second zone that is used to select a music track or radio station, Z3 may represent a third zone that is used to control a navigation system, and Z4 may represent a fourth zone that is used to control the internal temperature of the vehicle. If the driver would like to change the internal temperature of the vehicle, the driver may place his/her right hand RH on the user interface 550 or just above the user interface 550 at the fourth zone Z4, as illustrated in Figure 5A. When the sensor 170 described above senses that the driver's hand is located at or proximate to the fourth zone Z4, the user interface 550 may expand the fourth zone Z4 and shrink the other zones Z1, Z2 and Z3 so that more options become available to the driver with respect to temperature control. A haptic effect may be provided to the driver with the haptic output device 330 located in the steering wheel SW, for example, as a verification that the fourth zone Z4 has been enlarged and the driver now has access to the temperature controls, such as turning the air conditioner on or off, or adjusting the temperature or the speed of a fan. The driver may then position his/her finger over the part of the enlarged fourth zone Z4 that corresponds to the action that needs to be taken. Haptic effects provided by the haptic output device 330 on the steering wheel SW may be generated in such a manner that guides the driver to the various locations in the enlarged fourth zone Z4 that correspond to the different functions so that the driver may make adjustments to the temperature without having to look at the user interface 550.

The sensor 170 described above may then detect the position of the driver's finger with respect to the user interface 550, or a gesture provided by the driver, and send a signal to the processor 110 described above to determine the action needed to be taken by the subsystem of the vehicle. In an embodiment, a second sensor (not shown) that is part of a touch sensitive device of the user interface 550 may be used to detect the input from the user when the user contacts the touch sensitive device of the user interface 550 with a user input element, such as the user's finger. Again, as a confirmation of the command made by the driver, a corresponding haptic effect may be generated away from the user interface 550 and at the steering wheel SW the driver is contacting. In an embodiment, a haptic output device in the user interface 550 or connected to the user interface 550 may be used to provide an initial confirmatory haptic effect as the driver is touching the user interface 550, and then provide another haptic effect with the haptic output device 330 in the steering wheel SW. In an embodiment, the haptic effect at the user interface may only be generated as long as the user input element is contacting the user interface 550.

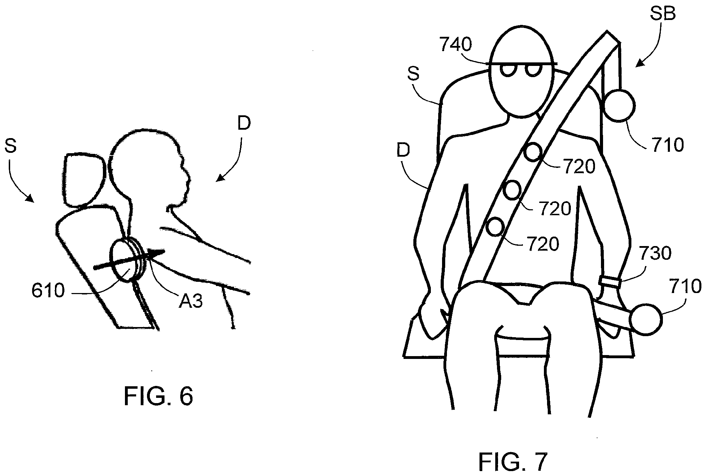

Similar to the haptically enabled steering wheel SW illustrated in Figure 3, in an embodiment, a driver's seat S of the vehicle may include a haptic output device 610 located at a position that the driver D will always be in contact with, such as in the upright portion of the seat that supports the driver's back, as illustrated in Figure 6. In the embodiment described above, haptic effects, such as vibrations or movement of the seat S towards the driver's back, as indicated by arrow A3, may be provided by the haptic output device 610 in the seat S instead of or in addition to the haptic effects provided by the steering wheel SW.

In an embodiment, one or more haptic output devices may be attached to or embedded in a seat belt SB and configured to generate kinesthetic and/or vibrotactile feedback to the driver D. As illustrated in Figure 7, one or more haptic output devices 710 may be part of a pulling force control mechanism that already exists in many seat belts, and may be configured to convey kinesthetic feedback by adjusting the tension in the seat belt SB. Additional haptic output devices 720 that are configured to generate vibrotactile feedback may be embedded in or attached to the seat belt SB to provide vibrotactile feedback in addition to the kinesthetic feedback provided by the haptic output devices 710. Other parts of the vehicle that the driver is typically in constant contact with, such as a floor board and/or gas and brake pedals, may also include haptic output devices so that haptic effects can be provided to the driver's feet. The illustrated embodiments are not intended to be limiting in any way.

Figure 7 also illustrates embodiments of wearable devices that may be used to provide haptic effects to the driver D. In an embodiment, the wearable device may be in the form of a wrist band 730, which may be a smartwatch or a fitness band. In an embodiment, the wearable device may be in the form of eyeglasses 740, which may be sunglasses or a head-mounted display such as GOOGLE GLASS® or BMW's Mini augmented reality goggles. In an embodiment, haptic effects may be provided to the driver via one or more of the wearable devices 730, 740 instead of or in addition to the other haptic output devices within the vehicle, such as the haptic output devices 310, 320, 330, 610, 710, 720 described above.

In an implementation of embodiments of the invention, the vehicle may include a user interface with a touch screen, but not include a haptically enabled steering wheel, seat, or seat belt. The driver of the vehicle in this implementation may be wearing a wearable device, such as a smartwatch, that includes at least one haptic output device and pairs with the user interface via a Bluetooth wireless connection, for example. The user interface may or may not include a haptic output device. Confirmations of inputs to the user interface may be provided by the wearable device to the driver of the vehicle. Similarly, in an embodiment, a smartphone that includes a haptic output device and is located in the driver's pocket may pair with the user interface and generate haptic effects based on interactions between the driver via the user input element and the user interface and/or signals output by the user interface.

In an embodiment a sensor within the vehicle may be used to sense the location of the smartphone that includes a haptic output device and the processor may determine the haptic effect to be generated to the user based in part on the sensed location of the smartphone. In an embodiment of the system that includes more than one electronic device with at least one haptic output device, a sensor within the vehicle may be used to sense the location of each device so that the processor may determine the ideal location to generate the haptic effect to the user. For example, if the driver is using the user interface to adjust the left mirror of the vehicle, the haptic effect may be generated by the electronic device that is closest to the left mirror of the vehicle, such as a smartphone in the driver's left pocket. If the driver is using the user interface to adjust the right mirror of the vehicle, the haptic effect may be generated by the electronic device that is closest to the right mirror, such as a smartwatch on the driver's right wrist. Similarly, if a haptic effect relating to motor performance is to be generated, the processor may determine to generate the haptic effect with the electronic device that includes a haptic output device that is closest to the driver's feet and vehicle's pedals, such as a haptically enabled anklet, etc.

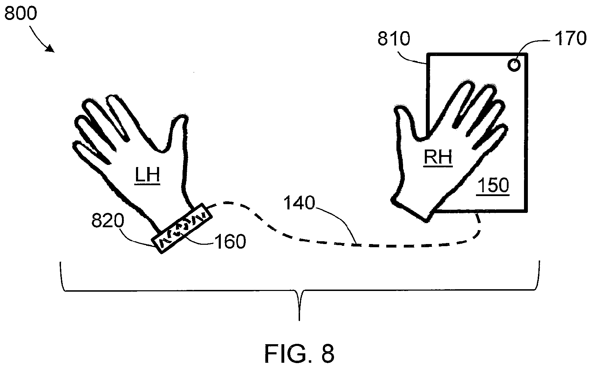

Figure 8 illustrates an implementation of embodiments of the invention that may be used outside of the context of a vehicle. As illustrated, a system 800 includes a handheld electronic device 810, which may be, for example, a smartphone or a tablet, and a wearable device 820, which may be, for example, a smartwatch. The handheld electronic device 810 includes the user interface 150 and the sensor 170 described above, and the wearable device 820 includes the haptic output device 160 described above. The handheld electronic device 810 and the wearable device 820 communicate with each other via a wireless communications network 840. The user may interact with the handheld electronic device 810 using his/her right hand RH without having to look at a display of the handheld electronic device 810, and receive haptic effects via the haptic output device 160 on the wearable device 820 to confirm the interactions with the handheld electronic device 810.

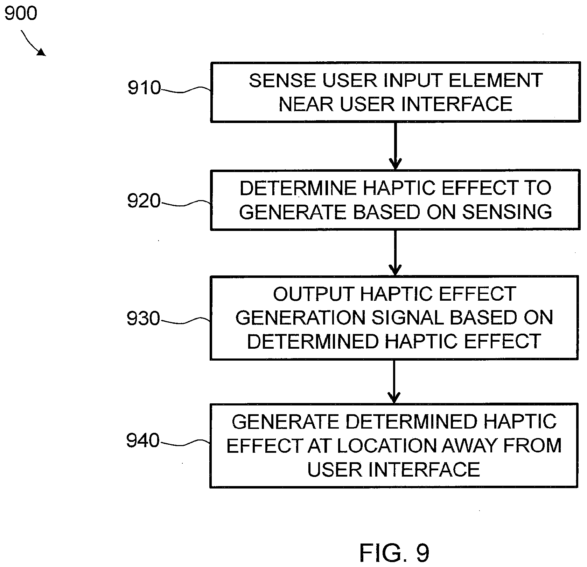

Figure 9 illustrates a flow chart of a method 900 for generating a haptic effect to a user of a system, such as the system 100 described above. At 910, a user input element, which may be part of a user's hand, such as a finger, or a stylus, is sensed near a user interface, such as the user interface 150 described above, with a sensor, such as the sensor 170 described above. At 920, a processor, such as the processor 110 described above, determines a haptic effect to generate based on the sensing of the user input element near or proximate to the user interface. At 930, a haptic effect generation signal based on the determined haptic effect is output by the processor to a haptic output device, such as the haptic output device 160 described above. At 940 the determined haptic effect is generated by the haptic output device at a location away from the user interface. The method may then return to 910, may end, or additional actions may be taken as part of the method.

For example, in an embodiment, an input by the user via the user input element contacting the user interface may be sensed by a sensor that is part of the user interface, such as a sensor that is part of a touch sensitive device, and a second haptic effect to generate to the user based on the input sensed may be determined with the processor. The second haptic effect may then be generated with a second haptic output device to the user at the user interface as a confirmation of the input by the user. In an embodiment, the second haptic effect may be generated as long as the user input element contacts the user interface. In an embodiment, a third haptic effect to generate to the user based on the input sensed may be determined with the processor, and the third haptic effect may be generated with the haptic output device to the user at the location away from the user interface. In an embodiment, the second haptic effect and the third haptic effect may be the same haptic effect or substantially the same haptic effect.

## Claims

1. A system (100) comprising:
a user interface (150) configured to receive an input, wherein the user interface has a plurality of zones (Z1-Z4) on a touch-sensitive surface (152) of the user interface, each zone of the plurality of zones being configured to control parameters of a respective subsystem of a vehicle;
a sensor (170) configured to sense a position of a user input element (RH, LH) relative to the touch-sensitive surface of the user interface when the user input element is proximate to, without being in contact with, the touch-sensitive surface of the user interface;
a processor (110) configured
to receive (910) a signal from the sensor that identifies which zone of the plurality of zones the user input element is proximate to,
to determine (920) a deformation haptic effect based on which zone of the plurality of zones the user input element is proximate to, and
to output (930) a haptic effect generation signal based on the deformation haptic effect to a haptic output device (160, 310, 320, 330) disposed in a steering wheel (SW) of the vehicle, wherein
the haptic output device is configured to deform one or more points on the steering wheel, and is further configured to generate (940) the deformation haptic effect on the steering wheel based on the haptic effect generation signal when the user input element is proximate to, without being in contact with, the touch-sensitive surface of the user interface.

2. The system according to claim 1, wherein the sensor is a first sensor, the system further comprising a second sensor configured to sense contact at the touch-sensitive surface from the user input element, wherein the input is received via the contact at the touch-sensitive surface,
wherein the haptic output device disposed in the steering wheel is a first haptic output device, and wherein the deformation haptic effect is a first haptic effect, and
wherein the user interface comprises a second haptic output device, wherein the second haptic output device is configured to generate a second haptic effect at the user interface as a confirmation of the input received via the contact at the touch-sensitive surface.

3. The system according to claim 2, wherein the first haptic output device is configured to generate a third haptic effect at the same time as the second haptic effect is generated.

4. The system of claim 1, wherein the touch-sensitive surface is part of a touch screen of the user interface, and wherein the processor is configured to cause the zone identified by the signal to expand on the touch screen, and to cause the haptic output device to generate the deformation haptic effect after the zone is expanded.

5. The system of claim 1, wherein the touch-sensitive surface is part of a touch pad.

6. The system of claim 1, wherein the haptic output device to which the haptic effect generation signal is outputted comprises an electroactive polymer (EAP) material.

7. The system of claim 1, wherein the haptic output device is a first haptic output device, and wherein the processor is configured to cause a second haptic output device connected to a seatbelt (SB) of the vehicle to generate a kinesthetic haptic effect by adjusting a tension in the seat belt.

8. The system of claim 1, wherein the sensor is a proximity sensor configured to sense the position of the user input element.

9. The system of claim 1, wherein the plurality of zones include a first zone (Z1) configured to provide stereo system volume control for the vehicle, a second zone (Z2) configured to provide radio selection control for the vehicle, a third zone (Z3) configured to provide navigation system control for the vehicle, and a fourth zone (Z4) configured to provide temperature control for the vehicle.

10. A method for vehicle subsystem control, the method comprising:
receiving (910), with a processor (110), a signal from a sensor (170) that identifies which zone of a plurality of zones (Z1-Z4) a user input element (RH, LH) is proximate to relative to a touch-sensitive surface (152) of a user interface (150), wherein the user interface has the plurality of zones on the touch-sensitive surface, each zone of the plurality of zones being configured to control parameters of a respective subsystem of a vehicle, and wherein the sensor is configured to sense a position of the user input element relative to the touch-sensitive surface when the user input element is proximate to, without being in contact with the touch-sensitive surface;
determining (920), with the processor, a deformation haptic effect to generate based on which zone of the plurality of zones the user input element is proximate to; and
outputting (930), with the processor, a haptic effect generation signal based on the deformation haptic effect to a haptic output device disposed in a steering wheel of the vehicle to cause the haptic output device (160, 310, 320, 330) to generate the deformation haptic effect on the steering wheel (SW) when the user input element is proximate to, without being in contact with, the touch-sensitive surface of the user interface, wherein the haptic output device is configured to deform one or more points on the steering wheel.

11. The method according to claim 10, wherein the deformation haptic effect is a first haptic effect, the haptic output device is a first haptic output device, and the sensor is a first sensor, the method further comprising:
receiving, with the processor, an input sensed by a second sensor, wherein the input is made by the user input element contacting the touch-sensitive surface of the user interface;
determining, with the processor, a second haptic effect to generate based on the input; and
causing, with the processor, a second haptic output device to generate the second haptic effect at the user interface as a confirmation of the input.

12. The method according to claim 11, wherein the second haptic effect is generated as long as the user input element contacts the user interface.

13. The method according to claim 12, further comprising:
determining, with the processor, a third haptic effect to generate based on the input; and
causing the first haptic output device to generate the third haptic effect at the same time as the second haptic effect is generated.

## Patentansprüche

1. System (100), das umfasst:
eine Benutzerschnittstelle (150), die dazu ausgelegt ist, eine Eingabe zu empfangen, wobei die Benutzerschnittstelle eine Vielzahl von Zonen (Z1-Z4) auf einer berührungsempfindlichen Oberfläche (152) der Benutzerschnittstelle aufweist, wobei jede Zone der Vielzahl von Zonen dazu ausgelegt ist, Parameter eines jeweiligen Untersystems eines Fahrzeugs zu steuern;
einen Sensor (170), der dazu ausgelegt ist, eine Position eines Benutzereingabeelements (RH, LH) relativ zur berührungsempfindlichen Oberfläche der Benutzerschnittstelle zu erfassen, wenn das Benutzereingabeelement nahe der berührungsempfindlichen Oberfläche der Benutzerschnittstelle liegt, ohne damit in Kontakt zu stehen;
einen Prozessor (110), der dazu ausgelegt ist,
ein Signal von dem Sensor zu empfangen (910), das identifiziert, nahe welcher Zone der Vielzahl von Zonen das Benutzereingabeelement liegt,
einen haptischen Verformungseffekt auf der Basis dessen zu bestimmen (920), nahe welcher Zone der Vielzahl von Zonen das Benutzereingabeelement liegt, und
ein Signal zur Erzeugung eines haptischen Effekts auf der Basis des haptischen Verformungseffekts an eine haptische Ausgabevorrichtung (160, 310, 320, 330), die in einem Lenkrad (SW) des Fahrzeugs angeordnet ist, auszugeben (930), wobei die haptische Ausgabevorrichtung dazu ausgelegt ist, einen oder mehrere Punkte am Lenkrad zu verformen, und ferner dazu ausgelegt ist, den haptischen Verformungseffekt am Lenkrad auf der Basis des Signals zur Erzeugung eines haptischen Effekts zu erzeugen (940), wenn das Benutzereingabeelement nahe der berührungsempfindlichen Oberfläche der Benutzerschnittstelle liegt, ohne damit in Kontakt zu stehen.

2. System nach Anspruch 1, wobei der Sensor ein erster Sensor ist, wobei das System ferner einen zweiten Sensor umfasst, der dazu ausgelegt ist, einen Kontakt an der berührungsempfindlichen Oberfläche von dem Benutzereingabeelement zu erfassen, wobei die Eingabe über den Kontakt an der berührungsempfindlichen Oberfläche empfangen wird,
wobei die haptische Ausgabevorrichtung, die im Lenkrad angeordnet ist, eine erste haptische Ausgabevorrichtung ist, und wobei der haptische Verformungseffekt ein erster haptischer Effekt ist, und
wobei die Benutzerschnittstelle eine zweite haptische Ausgabevorrichtung umfasst, wobei die zweite haptische Ausgabevorrichtung dazu ausgelegt ist, einen zweiten haptischen Effekt an der Benutzerschnittstelle als Bestätigung der über den Kontakt an der berührungsempfindlichen Oberfläche empfangenen Eingabe zu erzeugen.

3. System nach Anspruch 2, wobei die erste haptische Ausgabevorrichtung dazu ausgelegt ist, einen dritten haptischen Effekt zur gleichen Zeit, wie der zweite haptische Effekt erzeugt wird, zu erzeugen.

4. System nach Anspruch 1, wobei die berührungsempfindliche Oberfläche ein Teil eines Berührungsbildschirms der Benutzerschnittstelle ist, und wobei der Prozessor dazu ausgelegt ist zu bewirken, dass die durch das Signal identifizierte Zone sich auf dem Berührungsbildschirm ausdehnt, und zu bewirken, dass die haptische Ausgabevorrichtung den haptischen Verformungseffekt erzeugt, nachdem die Zone ausgedehnt ist.

5. System nach Anspruch 1, wobei die berührungsempfindliche Oberfläche ein Teil eines Berührungsfeldes ist.

6. System nach Anspruch 1, wobei die haptische Ausgabevorrichtung, an die das Signal zur Erzeugung eines haptischen Effekts ausgegeben wird, ein Material aus einem elektroaktiven Polymer (EAP) umfasst.

7. System nach Anspruch 1, wobei die haptische Ausgabevorrichtung eine erste haptische Ausgabevorrichtung ist und wobei der Prozessor dazu ausgelegt ist zu bewirken, dass eine zweite haptische Ausgabevorrichtung, die mit einem Sicherheitsgurt (SB) des Fahrzeugs verbunden ist, einen kinästhetischen haptischen Effekt durch Einstellen einer Spannung im Sicherheitsgurt erzeugt.

8. System nach Anspruch 1, wobei der Sensor ein Nähesensor ist, der dazu ausgelegt ist, die Position des Benutzereingabeelements zu erfassen.

9. System nach Anspruch 1, wobei die Vielzahl von Zonen eine erste Zone (Z1), die dazu ausgelegt ist, eine Stereosystemlautstärkesteuerung für das Fahrzeug bereitzustellen, eine zweite Zone (Z2), die dazu ausgelegt ist, eine Radioauswahlsteuerung für das Fahrzeug bereitzustellen, eine dritte Zone (Z3), die dazu ausgelegt ist, eine Navigationssystemsteuerung für das Fahrzeug bereitzustellen, und eine vierte Zone (Z4), die dazu ausgelegt ist, eine Temperatursteuerung für das Fahrzeug bereitzustellen, umfasst.

10. Verfahren für eine Fahrzeuguntersystemsteuerung, wobei das Verfahren umfasst:
Empfangen (910) eines Signals von einem Sensor (170) mit einem Prozessor (110), das identifiziert, nahe welcher Zone einer Vielzahl von Zonen (Z1-Z4) ein Benutzereingabeelement (RH, LH) relativ zu einer berührungsempfindlichen Oberfläche (152) einer Benutzerschnittstelle (150) liegt, wobei die Benutzerschnittstelle die Vielzahl von Zonen auf der berührungsempfindlichen Oberfläche aufweist, wobei jede Zone der Vielzahl von Zonen dazu ausgelegt ist, Parameter eines jeweiligen Untersystems eines Fahrzeugs zu steuern, und wobei der Sensor dazu ausgelegt ist, eine Position des Benutzereingabeelements relativ zur berührungsempfindlichen Oberfläche zu erfassen, wenn das Benutzereingabeelement nahe der berührungsempfindlichen Oberfläche liegt, ohne damit in Kontakt zu stehen;
Bestimmen (920) eines zu erzeugenden haptischen Verformungseffekts mit dem Prozessor auf der Basis dessen, nahe welcher Zone der Vielzahl von Zonen das Benutzereingabeelement liegt; und
Ausgeben (930) eines Signals zur Erzeugung eines haptischen Effekts mit dem Prozessor auf der Basis des haptischen Verformungseffekts an eine haptische Ausgabevorrichtung, die in einem Lenkrad des Fahrzeugs angeordnet ist, um zu bewirken, dass die haptische Ausgabevorrichtung (160, 310, 320, 330) den haptischen Verformungseffekt an dem Lenkrad (SW) erzeugt, wenn das Benutzereingabeelement nahe der berührungsempfindlichen Oberfläche der Benutzerschnittstelle liegt, ohne damit in Kontakt zu stehen, wobei die haptische Ausgabevorrichtung dazu ausgelegt ist, einen oder mehrere Punkte an dem Lenkrad zu verformen.

11. Verfahren nach Anspruch 10, wobei der haptische Verformungseffekt ein erster haptischer Effekt ist, die haptische Ausgabevorrichtung eine erste haptische Ausgabevorrichtung ist und der Sensor ein erster Sensor ist, wobei das Verfahren ferner umfasst:
Empfangen einer Eingabe mit dem Prozessor, die durch einen zweiten Sensor erfasst wird, wobei die Eingabe durchgeführt wird, indem das Benutzereingabeelement die berührungsempfindliche Oberfläche der Benutzerschnittstelle kontaktiert;
Bestimmen eines zu erzeugenden zweiten haptischen Effekts mit dem Prozessor auf der Basis der Eingabe; und
Bewirken mit dem Prozessor, dass eine zweite haptische Ausgabevorrichtung den zweiten haptischen Effekt an der Benutzerschnittstelle als Bestätigung der Eingabe erzeugt.

12. Verfahren nach Anspruch 11, wobei der zweite haptische Effekt erzeugt wird, solange das Benutzereingabeelement die Benutzerschnittstelle kontaktiert.

13. Verfahren nach Anspruch 12, das ferner umfasst:
Bestimmen eines zu erzeugenden dritten haptischen Effekts mit dem Prozessor auf der Basis der Eingabe; und
Bewirken, dass die erste haptische Ausgabevorrichtung den dritten haptischen Effekt zur gleichen Zeit, wie der zweite haptische Effekt erzeugt wird, erzeugt.

## Revendications

1. Système (100) comportant:
un interface utilisateur (150) configuré pour recevoir une entrée, l'interface utilisateur ayant une pluralité de zones (Z1-Z4) sur une surface sensible au toucher (152) de l'interface utilisateur, chaque zone de la pluralité de zones étant configurée pour commander des paramètres d'un sous-système respectif d'un véhicule;
un capteur (170) configuré pour détecter une position d'un élément d'entrée d'utilisateur (RH, LH) relative à la surface sensible au toucher de l'interface utilisateur lorsque l'élément d'entrée d'utilisateur est à proximité de, sans être en contact avec, la surface sensible au toucher de l'interface utilisateur;
un processeur (110) configuré pour recevoir (910) un signal du capteur identifiant à quelle zone de la pluralité de zones l'élément d'entrée d'utilisateur est proche, pour déterminer (920) un effet haptique de déformation sur la base à quelle zone de la pluralité de zones l'élément d'entrée d'utilisateur est proche, et pour émettre (930) un signal de génération d'effet haptique basé sur l'effet haptique de déformation à un dispositif de sortie haptique (160, 310, 320, 330) disposé dans un volant (SW) du véhicule, le dispositif de sortie haptique étant configuré pour déformer un ou plusieurs points sur le volant et étant configuré en outre pour générer (940) l'effet haptique de déformation sur le volant basé sur le signal de génération d'effet haptique lorsque l'élément d'entrée d'utilisateur est à proximité de, sans être en contact avec, la surface sensible au toucher de l'interface utilisateur.

2. Système selon la revendication 1, le capteur étant un premier capteur, le système comportant en outre un second capteur configuré pour détecter le contact à la surface sensible au toucher de l'élément d'entrée d'utilisateur, l'entrée étant reçue par le contact à la surface sensible au toucher,
le dispositif de sortie haptique disposé dans le volant étant un premier dispositif de sortie haptique, et l'effet haptique de déformation étant un premier effet haptique, et
l'interface utilisateur comportant un second dispositif de sortie haptique, le second dispositif de sortie haptique étant configuré pour générer un second effet haptique à l'interface utilisateur comme confirmation de l'entrée reçue par le contact à la surface sensible au toucher.

3. Système selon la revendication 2, le premier dispositif de sortie haptique étant configuré pour générer un troisième effet haptique simultanément avec la génération du second effet haptique.

4. Système selon la revendication 1, la surface sensible au toucher faisant partie d'un écran tactile de l'interface utilisateur, et le processeur étant configuré pour provoquer l'expansion sur l'écran tactile par la zone identifiée par le signal, et pour provoquer la génération de l'effet haptique de déformation par le dispositif de sortie haptique après l'expansion de la zone.

5. Système selon la revendication 1, la surface sensible au toucher faisant partie d'un touchpad.

6. Système selon la revendication 1, le dispositif de sortie haptique auquel le signal de génération d'effet haptique est émis comportant un matériau polymère électroactif (EAP).

7. Système selon la revendication 1, le dispositif de sortie haptique étant un premier dispositif de sortie haptique, et le processeur étant configuré pour provoquer la génération d'un effet haptique kinesthésique par un second dispositif de sortie haptique relié à une ceinture de sécurité (SB) du véhicule en ajustant une tension dans la ceinture de sécurité.

8. Système selon la revendication 1, le capteur étant un capteur de proximité configuré pour détecter la position de l'élément d'entrée d'utilisateur.

9. Système selon la revendication 1, la pluralité de zones comprenant une première zone (Z1) configuré pour fournir une commande de volume du système stéréo pour le véhicule, une seconde zone (Z2) configuré pour fournir une commande de sélection de radio pour le véhicule, une troisième zone (Z3) configuré pour fournir une commande de système de navigation pour le véhicule, et une quatrième zone (Z4) configuré pour fournir une commande de température (Z4) pour le véhicule.

10. Procédé pour la commande du sous-système du véhicule, le procédé comportant:
recevoir (910), avec un processeur (110), un signal d'un capteur (170) identifiant à quelle zone d'une pluralité de zones (Z1-Z4) un élément d'entrée d'utilisateur est proche relative à une surface sensible au toucher (152) d'une interface utilisateur (150),
l'interface utilisateur ayant la pluralité de zones sur la surface sensible au toucher, chaque zone de la pluralité de zones étant configurée pour commander des paramètres d'un sous-système respectif d'un véhicule, et le capteur étant configuré pour détecter une position de l'élément d'entrée d'utilisateur relative à la surface sensible au toucher lorsque l'élément d'entrée d'utilisateur est à proximité de, sans être en contact avec, la surface sensible au toucher;
déterminer(920), avec le processeur, un effet haptique de déformation à générer, sur la base à quelle zone de la pluralité de zones l'élément d'entrée d'utilisateur est proche; et
émettre (930), avec le processeur, un signal de génération d'effet haptique basé sur l'effet haptique de déformation à un dispositif de sortie haptique disposé dans un volant du véhicule pour provoquer la génération de l'effet haptique de déformation sur le volant (SW) par le dispositif de sortie haptique (160, 310, 320, 330) lorsque l'élément d'entrée d'utilisateur est à proximité de, sans être en contact avec, la surface sensible au toucher de l'interface utilisateur, le dispositif de sortie haptique étant configuré pour déformer un ou plusieurs points sur le volant.

11. Procédé selon la revendication 10, l'effet haptique de déformation étant un premier effet haptique, le dispositif de sortie haptique étant un premier dispositif de sortie haptique, et le capteur étant un premier capteur, le procédé comprenant en outre:
recevoir, avec le processeur, une entrée détectée par un second capteur, l'entrée étant effectuée par l'élément d'entrée d'utilisateur contactant la surface sensible au toucher de l'interface utilisateur;
déterminer, avec le processeur, un second effet haptique à générer basé sur l'entrée;
et
provoquer, avec le processeur, la génération du second effet haptique par le second dispositif de sortie haptique à l'interface utilisateur comme confirmation de l'entrée.

12. Procédé selon la revendication 11, le second effet haptique étant généré aussi longtemps que l'élément d'entrée d'utilisateur contacte l'interface utilisateur.

13. Procédé selon la revendication 12, comprenant en outre:
déterminer, avec le processeur, un troisième effet haptique à générer basé sur l'entrée;
et
provoquer la génération du troisième effet haptique par le premier dispositif de sortie haptique simultanément avec la génération du second effet haptique.
